(19) Europäisches Patentamt
European Patent Office
Office européen des brevets

(11) EP 4 588 954 A1

(12) EUROPEAN PATENT APPLICATION
published in accordance with Art. 153(4) EPC

(43) Date of publication:
**23.07.2025 Bulletin 2025/30**

(21) Application number: **23921981.9**

(22) Date of filing: **17.02.2023**

(51) International Patent Classification (IPC):
***C08G 65/08** (2006.01)* ***C08F 16/12** (2006.01)*
***C08F 116/12** (2006.01)* ***C08L 29/10** (2006.01)*
***C08L 35/08** (2006.01)* ***H01M 4/62** (2006.01)*
***H01M 4/137** (2010.01)*

(52) Cooperative Patent Classification (CPC):
**C08F 16/12; C08F 116/12; C08G 65/08; C08L 29/10; C08L 35/08; H01M 4/137; H01M 4/62;**
Y02E 60/10

(86) International application number:
**PCT/CN2023/076843**

(87) International publication number:
**WO 2024/168832 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central (HK)**

(72) Inventors:
- **PENG, Shuangjuan**
**Ningde, Fujian 352100 (CN)**
- **PENG, Lin**
**Ningde, Fujian 352100 (CN)**
- **LI, Baiqing**
**Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

# (54) ETHER POLYMER, ELECTRODE SHEET, AND BATTERY CELL, BATTERY, AND ELECTRIC DEVICE RELATED THERETO

(57) The present application provides an ether polymer, an electrode sheet, and a battery cell, a battery, and an electric device related thereto. The ether polymer is added to a first solvent at 45°C to form an ether polymer system; the ether polymer system stands for 8 hours at 45°C; after standing for 24 hours or longer at 25°C, the ether polymer system is filtered by means of a 200-mesh filter screen and then a first substance remains. The mass of the ether polymer is n, and the unit of the ether polymer is g; the mass of the first substance is m, and the unit of the first substance is g; the ether polymer and the first substance satisfy: $5 \leq m/n \leq 1000$. When the ether polymer is applied to a battery cell, the cycle performance of the battery cell can be improved.

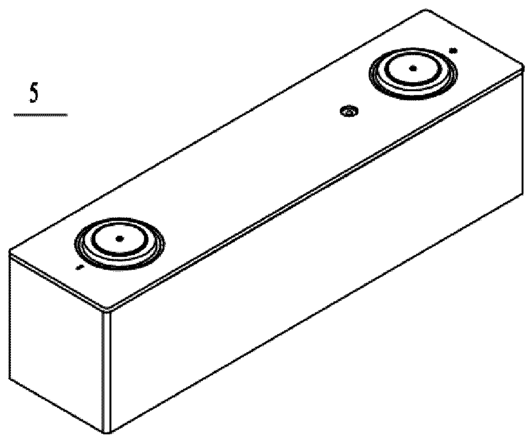


FIG. 1

EP 4 588 954 A1

## Description

### TECHNICAL FIELD

The present application relates to the field of batteries, and in particular to an ether polymer, an electrode plate, and a battery cell, a battery, and an electrical device related thereto.

### BACKGROUND

Battery cells have been widely used in electrical devices such as mobile phones, laptops, battery-powered electric vehicles, electric vehicles, electric aircraft, electric ships, electric toy cars, electric toy ships, electric toy aircrafts, power tools and the like due to their characteristics such as high capacity and long lifespan.

As batteries are increasingly used in a wider range of applications, the requirements for performances of battery cells are becoming more stringent. To enhance the safety performance of battery cells, the performances of the electrode plate in the battery cell are typically optimized and improved. However, currently, the active material in the electrode plate has a poor liquid absorption capacity, resulting in poor cycle performance of the battery cell when using such electrode plate.

### SUMMARY

The present application was made taking the aforementioned problems into account, and has an object of providing an ether polymer, an electrode plate, and a battery cell, a battery, and an electrical device related thereto.

A first aspect of the present application provides an ether polymer for use in a battery cell, the ether polymer satisfying $5 \leq m/n \leq 1000$, in which n denotes a mass of the ether polymer in units of g, and m denotes a mass of a first substance in units of g, which is obtained by adding the ether polymer in a mass of n grams to a first solvent at 45°C to form an ether polymer system, allowing the ether polymer system to stand at 45°C for 8h and then at 25°C for ≥24h, and filtering the ether polymer system through a 200-mesh filter to leave a filtered-out substance as the first substance. The ether polymer satisfying the aforementioned conditions can further enhance the cycle performance and preservation performance of the battery cell.

Accordingly, in a higher temperature range where the secondary battery normally operates, the ether polymer according to the present application can enable molecular chains to stretch, and thus promote the attractive interaction or physical bonding of the molecular chains of the ether polymers with solvents in the electrolytic solution, which is conducive to the binding of the molecular chains of the ether polymers to the solvents, thereby allowing the electrolytic solution to be stored in the active material layer. Moreover, in a lower temperature range where the secondary battery normally operates, the ether polymers may become immobile, maintaining their adherence to the surface of the active material while locking the electrolytic solution in the spatial environment of the ether polymer, which leads to improved liquid storage capacity of the active material layer and better infiltration of the electrolytic solution into the active material layer, thereby enhancing the cycle performance of the secondary battery utilizing the ether polymer.

In some embodiments, $10 \leq m/n \leq 1000$, further optionally, $10 \leq m/n \leq 50$. The ether polymer, when satisfying the aforementioned conditions, can further enhance the cycle performance of the battery cell.

In some embodiments, the first solvent includes cyclic carbonate solvents and/or chain carbonate solvents;

optionally, the cyclic carbonate solvents include one or more of ethylene carbonate (EC), vinylene carbonate (VC), fluoroethylene carbonate (FEC), difluoroethylene carbonate (DFEC), vinyl ethylene carbonate (VEC), and dioctyl carbonate (CC);
optionally, the chain carbonate solvents include one or more of dimethyl carbonate (DMC), diethyl carbonate (DEC), ethyl methyl carbonate (EMC), diphenyl carbonate (DPC), methyl allyl carbonate (MAC), and polycarbonate (VA).

In some embodiments, the ether polymer has a slope K of an elastic modulus G'-loss modulus G" curve, and $1 < K < \infty$, where the elastic modulus G'-loss modulus G" curve is obtained by subjecting a sheet-like structure made of the ether polymer to a dynamic frequency sweep test at $(T_m+20)$ °C, $T_m$, °C denoting a melting temperature of the ether polymer.

The ether polymer according to the present application, when satisfying the aforementioned range, can further reduce the entanglement state of molecular chains, which is conducive to solvent molecules in the electrolytic solution dispersing between the molecular chains. Furthermore, the ether polymer still maintains the entanglement of molecular chains to a certain extent, making it possible to lock solvent molecules in situ inside the polymer, and to reduce the risk of the ether polymer being dissolved in the electrolytic solution, thereby improving the stability of performance of the polymer. Additionally, the ether polymer can easily form a protective layer on the surface of the active material to improve the performance of the solid-liquid interface, which can suppress side reactions between the active material and the

electrolytic solution, leading to enhanced cycle performance of the battery cell.

In some embodiments, the glass transition temperature of the ether polymer is Tg, which is in units of °C, and $-100 \le Tg \le 50$, optionally, $-80 \le Tg \le 30$. A lower glass transition temperature of the ether polymer makes the segments of the molecular chains more flexible, and thus the adjacent molecular chains are more easily cleaved to form a gel-like substance in situ more easily, which improves the infiltration of the electrolytic solution into the active material, leading to enhanced cycle performance of the battery cell.

In some embodiments, the ether polymer includes structural units represented by Formula (I):

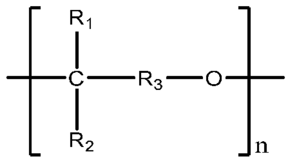 Formula (I)

in which

$R_1$ and $R_2$ each independently include a hydrogen atom, a substituted or unsubstituted C1-C3 alkyl group, or a substituted or unsubstituted C1-C3 alkoxy group; $R_3$ includes a substituted or unsubstituted C1-C5 methylene group; optionally, $R_1$ and $R_2$ each independently include a hydrogen atom, a substituted or unsubstituted C1-C2 alkyl group, and/or $R_3$ includes a single bond, a substituted or unsubstituted C1-C4 methylene group.

In some embodiments, the ether polymer includes at least one of structural units represented by Formula (I-1) to Formula (I-8):

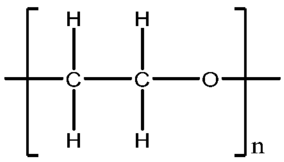 Formula (I-1), 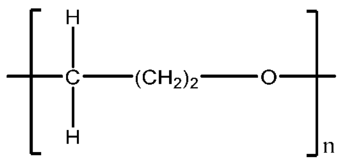 Formula (I-2),

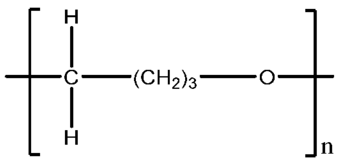 Formula (I-3), 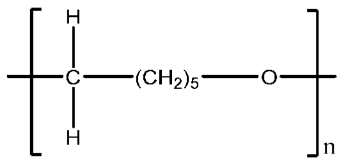 Formula (I-4),

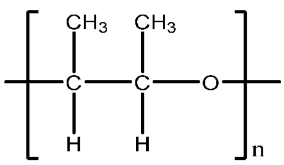 Formula (I-5), 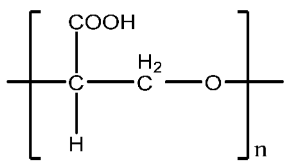 Formula (I-6),

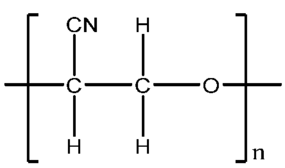 Formula (I-7), 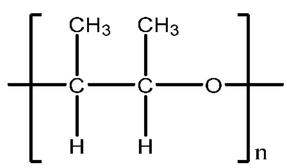 Formula (I-8).

In some embodiments, the ether polymer includes structural units represented by Formula (II):

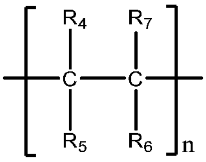 Formula (II)

in which

$R_4$ to $R_7$ each independently include a hydrogen atom, a substituted or unsubstituted C1-C3 alkyl group, a substituted or unsubstituted C1-C3 alkoxy group or an ether group, and at least one of $R_4$ to $R_7$ includes a substituted or unsubstituted C1-C3 alkoxy group or an ether group; optionally, $R_4$ to $R_7$ each independently include a hydrogen atom, a substituted or unsubstituted C1-C2 alkyl group, a substituted or unsubstituted C1-C2 alkoxy group or an ether group, and at least one of $R_4$ to $R_7$ includes a substituted or unsubstituted C1-C2 alkoxy group or an ether group.

In some embodiments, the ether polymer includes at least one of structural units represented by Formula (II-1) to Formula (II-7):

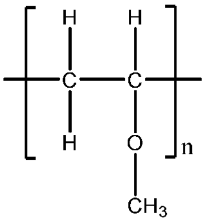 Formula (II-1), 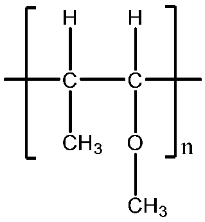 Formula (II-2),

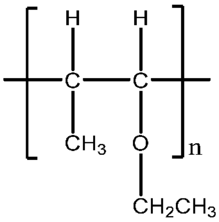 Formula (II-3), 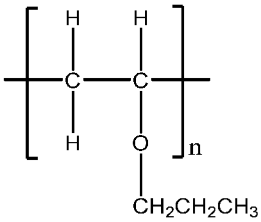 Formula (II-4),

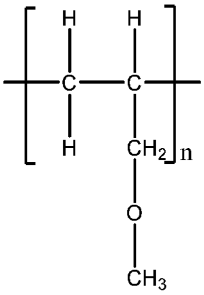 Formula (II-5), 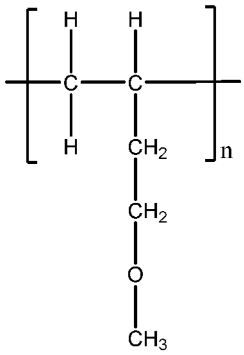 Formula (II-6),

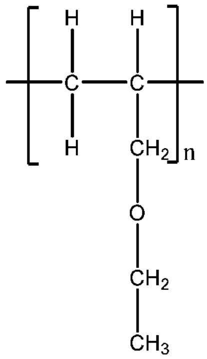

Formula (II-7).

In some embodiments, n is selected from positive integers in a range of 1500 to 25000, and/or the molecular weight of the ether polymer is in a range of $1.2\times10^5$ g/mol to $1.0\times10^6$ g/mol. The polymer, the molecular weight of which falls within the aforementioned ranges, can be ensured to be soluble to some degree in the electrolytic solution, yet resistant to complete dissolution or dispersion in the electrolytic solution, which is conducive to controlling the distribution and dispersion of the polymer on the surface of the active material. Additionally, the molecular chains of the polymer can become more flexible, and thus the force between the molecular chains is weakened, which is conducive to the solvent molecules in the electrolytic solution opening the molecular chains, entering between the molecular chains, and becoming wrapped by the molecular chains. Therefore, this facilitates the active ions entering the active material through the solvent and achieves smooth and quick transfer of active ions.

A second aspect of the present application provides a positive electrode plate comprising a positive electrode current collector and a positive electrode film layer disposed on the positive electrode current collector, the positive electrode film layer comprising a positive electrode active material and an ether polymer which comprises an ether polymer according to any one of the embodiments of the first aspect of the present application.

A third aspect of the present application provides a negative electrode plate comprising a negative electrode current collector and a negative electrode film layer disposed on the negative electrode current collector, the negative electrode film layer comprising a negative electrode active material and an ether polymer which comprises an ether polymer according to any one of the embodiments of the first aspect of the present application.

A fourth aspect of the present application provides a battery cell comprising a positive electrode plate and a negative electrode plate, wherein the positive electrode plate comprises a positive electrode plate according to any one of the embodiments of the second aspect of the present application, and the negative electrode plate comprises a negative electrode plate according to any one of the embodiments of the third aspect of the present application.

A fifth aspect of the present application provides a battery comprising a battery cell according to the fourth aspect of the present application.

A sixth aspect of the present application provides an electrical device comprising a battery according to the fifth aspect of the present application.

## DESCRIPTION OF THE DRAWINGS

In order to more clearly explain the technical solutions of the embodiments of the present application, the accompanying drawings required for the embodiments of the present application are briefly described below. Apparently, these drawings described below are merely some embodiments of the present application, and those skilled in the art may still derive other drawings from these accompanying drawings without creative efforts. In the drawings:

FIG. 1 is a schematic diagram of an embodiment of a battery cell according to the present application.
FIG. 2 is an exploded view of the embodiment of the battery cell in FIG. 1.
FIG. 3 is a schematic diagram of an embodiment of a battery module according to the present application.
FIG. 4 is a schematic diagram of an embodiment of a battery pack according to the present application.
FIG. 5 is an exploded view of the embodiment of the battery pack in FIG. 4.
FIG. 6 is a schematic diagram of an embodiment of an electrical device provided with the battery cell according to the present application as a power source.

The drawings are not drawn to scale. Reference numerals are as follows: 1 battery pack, 2 upper case body, 3 lower case body, 4 battery module, 5 battery cell, 51 casing, 52 electrode assembly, 53 cover plate, 6 electrical device.

## DETAILED DESCRIPTION

Hereinafter, embodiments of an ether polymer, an electrode plate, and a battery cell, a battery, and an electrical device related thereto according to the present application will be described in detail. However, unnecessary detailed descriptions, for example the detailed description of a well-known item or the repetitive description of an actually identical structure, may be omitted in some cases so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.
The "range(s)" disclosed in the present application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all contemplated: 1-3, 1-4, 1-5, 2- 3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.
Unless stated otherwise, all the embodiments and the optional embodiments of the present application can be combined with each other to form a new technical solution. Unless stated otherwise, all the technical features and the optional technical features of the present application can be combined with each other to form a new technical solution.
Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.
Unless stated otherwise, the phrases "comprise/comprising", "include/including", and "contain/containing" mentioned in the present application is construed in an open mode, or may also construed in a close mode. For example, the phrases "comprise/comprising", "include/including", and "contain/containing" may mean that other components not listed may also be comprised, included or contained, or only the listed components may be comprised, included or contained.
In the present application, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).
In the present application herein, the terms "multiple" and "more than one" mean two or more.
The term "alkyl group" encompasses both linear and branched alkyl groups. For example, alkyl groups may be C1-C5 alkyl group, a C1-C4 alkyl group, a C1-C3 alkyl group, or a C1-C2 alkyl group. In some embodiments, alkyl groups include methyl, ethyl, propyl, isopropyl, butyl, isobutyl, and the like. Additionally, alkyl groups may be optionally substituted. When substituted, the substituents include fluorine atoms.
The term "alkoxy group" refers to a group in which an alkyl group is connected to an oxygen atom through a single bond. For instance, alkoxy groups may be a $C_1$-$C_5$ alkoxy group, a $C_1$-$C_3$ alkoxy group, or a $C_1$-$C_2$ alkoxy group. In some embodiments, alkoxy groups can include methoxy, ethoxy, and propoxy. Additionally, alkoxy groups may be optionally substituted.
The term "halogen atom" refers to fluorine atom, chlorine atom, bromine atom, and the like.
The term "hydrogen" refers to 1H (protium, H), 2H (deuterium, D), or 3H (tritium, T). In various embodiments, "hydrogen" may be 1H (protium, H).
The secondary battery comprises a positive electrode plate, a negative electrode plate and an electrolytic solution, and the electrolytic solution infiltrates the positive electrode plate and the negative electrode plate, allowing the active ions to smoothly transfer between the positive electrode plate and the negative electrode plate.
The electrode plate (e.g., a positive electrode plate and/or a negative electrode plate) comprises a current collector and an active material layer disposed on at least one surface of the current collector, and the active material layer includes pore structures through which the electrolytic solution disperses from the surface of the active material to the interior of the active material layer to the active material layer, allowing the active material layer to be infiltrated with the electrolytic solution, and thereby achieving smooth transfer of active ions from the positive electrode plate to the negative

electrode plate.

In the related technology, the active material layer tends to exhibit poor affinity to the electrolytic solution, and the electrolytic solution has poor infiltration into the active material layer, resulting in poor liquid storage capacity of the active material layer. In the process of using, transporting, or assembling the secondary battery into a module, the secondary battery may receive an external squeezing force, and the electrolytic solution in the active material layer is squeezed out of the active material layer by the external squeezing force, making it gradually difficult to suck back, resulting in decrease in the capacity of the secondary battery and deterioration in the cycle performance of the secondary battery.

In view of the above problems, from the viewpoint of improving liquid storage capacity of the electrode plate, the embodiment of the present application proposes adding the ether polymer to electrode plates, which improves the affinity of the electrode plate to the electrolytic solution and the infiltration of the electrolytic solution into the electrode plate, thereby enhancing the cycle performance of the secondary battery utilizing the ether polymer.

Ether polymer

A first aspect of the present application proposes an ether polymer for use in a battery cell, the ether polymer satisfying $5 \leq m/n \leq 1000$, in which n denotes a mass of the ether polymer in units of g, and m denotes a mass of a first substance in units of g. The first substance is obtained as follows. The ether polymer in a mass of n grams is added to a first solvent at 45°C to form an ether polymer system. The ether polymer system is allowed to stand at 45°C for 8h and then at 25°C for ≥ 24 hours, and after subjecting to the two-stage standing process, the ether polymer system partially transforms into a gel-like substance in situ, and is then filtered with a 200-mesh filter, leaving a first substance. The ether polymer system is filtered with a 200-mesh filter to remove a mobile phase solvent, leaving a filter-out substance as a first substance. The ether polymer and the ether polymer and the first substance satisfy $5 \leq m/n \leq 1000$, optionally $10 \leq m/n \leq 1000$, further optionally $10 \leq m/n \leq 50$, in which n denotes a mass of the ether polymer, and m denotes a mass of the first substance, both of which are in units of g. For example, m/n may be 5, 10, 20, 25, 28, 30, 32, 35, 40, 50, 80, 100, 200, 500, 1000 or in a range consisting of any two of the aforementioned values.

For example, based on the mass of the ether polymer system, a ratio of the mass content of the ether polymer to the mass content of the first solvent is in a range of 1:100 to 1: 10, for example 3:50.

For example, the first solvent is the same as or similar to the solvent in the electrolytic solution, which can include carbonate-based solvents. The carbonate-based solvents include, for example, cyclic carbonate solvents and/or chain carbonate solvents.

Examples of cyclic carbonate solvents include one or more of ethylene carbonate (EC), vinylene carbonate (VC), fluoroethylene carbonate (FEC), difluoroethylene carbonate (DFEC), vinyl ethylene carbonate (VEC), and dioctyl carbonate (CC).

Examples of the chain carbonate solvent include one or more of dimethyl carbonate (DMC), diethyl carbonate (DEC), ethyl methyl carbonate (EMC), diphenyl carbonate (DPC), methyl allyl carbonate (MAC) and polycarbonate (VA).

Optionally, the first solvent may include both lithium salts and electrolytic solution additives, such as lithium hexafluorophosphate, vinylene carbonate (VC), fluorovinylene carbonate (FEC), etc.

In the present application, m/n is also referred to as a precipitation value, which characterizes the ability of the ether polymer and the solvent transforming into gel-state substances.

The first substance primarily includes gel-state substances formed by the ether polymer and the first solvent, and in such gel-state substances, the molecular structure of the ether polymer is substantially not changed.

In some embodiments, the first substance is dried at 80°C for 12 hours to remove the first solvent therefrom, and then detected through infrared spectroscopy (IR) or tested through nuclear magnetic resonance (NMR). After drying, the first substance is primarily composed of the ether polymer mentioned above.

In a higher temperature range where the secondary battery normally operates, the ether polymer can enable molecular chains to stretch, and thus promote the attractive interaction or physical bonding of the molecular chains of the ether polymers with solvents in the electrolytic solution, which is conducive to the binding of the molecular chains of the ether polymers to the solvents, thereby allowing the electrolytic solution to be stored in the active material layer. Moreover, in a lower temperature range where the secondary battery normally operates, the ether polymers may become immobile, maintaining their adherence to the surface of the active material while locking the electrolytic solution in the spatial environment of the ether polymer, which leads to improved liquid storage capacity of the active material layer and better infiltration of the electrolytic solution into the active material layer, thereby enhancing the cycle performance of the secondary battery utilizing the ether polymer.

By increasing the temperature, the present application can enable the molecular chains of the ether polymers to stretch within a temperature range where the battery cell normally operates, so as to promote attractive interaction and physical bonding of the molecular chains of the ether polymers with the solvents. At room temperature, the ether polymers have low activity of the molecular chain segments, and thus maintain their adherence to the surface of the active material while locking the electrolytic solution in the spatial environment of the ether polymers to form an in-situ gel-like state,

improving the liquid storage capacity of the active material and thereby enhancing the cycle performance.

In some embodiments, the ether polymer has a slope K of an elastic modulus G'-loss modulus G" curve, and $1 < K < \infty$, optionally $1 < K \leq 100$, optionally $1 < K \leq 10$, where the elastic modulus G'-loss modulus G" curve is obtained by subjecting a sheet-like structure made of the ether polymer to a dynamic frequency sweep test at (Tm+20) °C, Tm (°C) denoting a melting temperature of the ether polymer.

Specifically, the sheet-like structure is prepared as follows. The polymer is vacuum-dried at 80°C for 12h. The polymer after drying is hot-rolled into sheets using a plate vulcanizing machine, where the hot-rolling temperature is set to (Tm+20)°C, the rolling thickness is in a range of 1 to 2min, the rolling time is 2min, and the pressure is 8MPa. After rolling for 2min, the sample is taken out, and then placed in another vulcanizing machine with the same model number for cold rolling, where the cold rolling pressure is 10MPa. A fixed-size polymer wafer (sheet-like structure) can be obtained using a circular die with a diameter of 25mm. For example, the sheet-like structure may be a wafer with a thickness of 1 to 2mm and a diameter of 25mm, but may also be prepared according to a sample standard required for the test device.

According to the conclusions of the classical linear viscoelasticity, for polymers, particularly linear polymers, the elastic modulus G'-loss modulus G" in the terminal region (the range where angular velocity approaches the maximum value) of the elastic modulus G'-loss modulus G" curve exhibits the frequency dependence, and the longest chains of the polymer act on the viscoelastic behavior.

Specifically, the procedures of the dynamic frequency sweep test are as follows. A dynamic frequency sweep test is run using a TA-AR 2000EX rotational rheometer (TA instruments, USA) on a parallel plate with a diameter of 25 mm and a thickness of 0.9 mm. In order to ensure that the test is run in the linear viscoelastic region, the strain in the dynamic frequency sweep test is 2%, the test temperature is (Tm+20)°C, and the frequency sweep range in the test is $500 rad/s \leq w^2 \leq 0.05 rad/s$, so as to obtain data of the low frequency region as much as possible.

The dynamic frequency sweep test can characterize the degree of entanglement of molecular chains during melting (molten state) of solid phase. Compared with linear or short-branched structures, long-branched, network and low cross-linked structures have a higher degree of entanglement and will exhibit behavior of deviating from the linear terminal, resulting in solid-phase behavior of the polymer. The polymer according to the present application satisfying the above range can further reduce the entanglement state of molecular chains, which is conducive to solvent molecules in the electrolytic solution dispersing between the molecular chains. Furthermore, the ether polymers still maintain the entanglement of molecular chains to a certain extent, making it possible to lock solvent molecules in situ inside the polymer, and reduce the risk of the ether polymer being dissolved in the electrolytic solution, thereby improving the stability of performance of the polymer. Additionally, the ether polymer can easily form a protective layer on the surface of the active material to improve the performance of the solid-liquid interface, which can suppress side reactions between the active material and the electrolytic solution, leading to enhanced cycle performance and preservation performance of the battery cell.

In some embodiments, the glass transition temperature of the ether polymer is Tg, which is in units of °C, and $-100 \leq Tg \leq 50$, optionally, $-80 \leq Tg \leq 30$.

The glass transition temperature refers to the temperature at which the molecular chain segments of the ether polymer transits from a frozen state to a movable state, which has certain effect on the flexibility of the molecular chains of the ether polymer; that is, the lower the glass transition temperature, the better the flexibility of the molecular chains of the ether polymer at room temperature, whereas the higher the glass transition temperature, the worse the flexibility of the molecular chains at room temperature. The glass transition temperature can be tested by differential scanning calorimetry (DSC), and the test procedure is specifically as follows. 0.5 g to 0.8 g of a sample is placed in a carrier crucible, and then subjected to a heating and cooling process under a nitrogen gas atmosphere, at a heating rate of 10°C/min from an initial temperature 20°C lower than the material's intrinsic Tg, to a cutoff temperature 20°C higher than the material's intrinsic Tm. Based on endothermic and exothermic peak values or transition points of the material during the process, the actual glass transition temperature Tg, the melting temperature Tm, etc. of the material are determined.

A lower glass transition temperature of the ether polymer makes the molecular chain segments more flexible, causing adjacent molecular chains more likely to disentangle. For example, the glass transition temperature of the ether polymer may be -100°C, -90°C, -80°C, -60°C, -30°C, 0°C, 30°C, 50°C, or in a range consisting of any two of the aforementioned values.

In some embodiments, the ether polymer includes structural units represented by Formula (I):

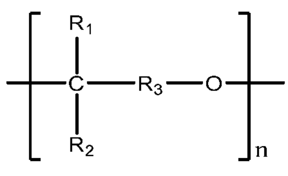

Formula (I)

in which

$R_1$ and $R_2$ each independently include a hydrogen atom, a substituted or unsubstituted C1-C3 alkyl group, or a substituted or unsubstituted C1-C3 alkoxy group; $R_3$ includes a substituted or unsubstituted C1-C5 methylene group; optionally, $R_1$ and $R_2$ each independently include a hydrogen atom, a substituted or unsubstituted C1-C2 alkyl group, and/or $R_3$ includes a single bond, a substituted or unsubstituted C1-C4 methylene group.

In some embodiments, the ether polymer includes at least one of structural units represented by Formula (I-1) to Formula (I-8):

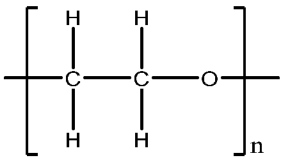 Formula (I-1), 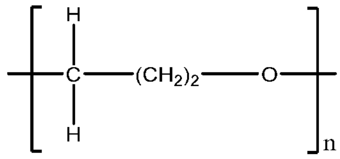 Formula (I-2),

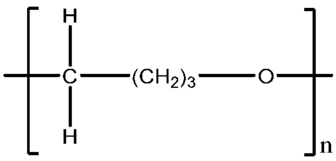 Formula (I-3), 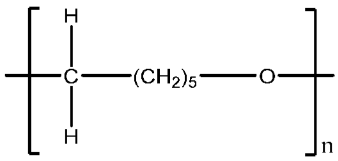 Formula (I-4),

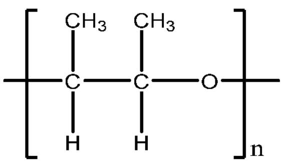 Formula (I-5), 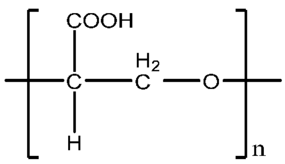 Formula (I-6),

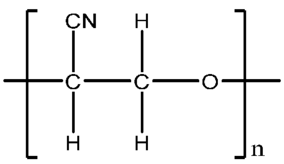 Formula (I-7), 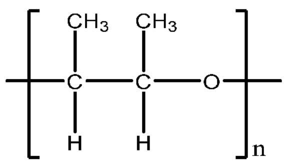 Formula (I-8).

In some embodiments, the ether polymer includes structural units represented by Formula (II):

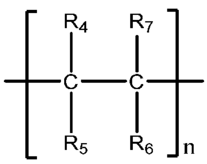 Formula (II)

in which

$R_4$ to $R_7$ each independently include a hydrogen atom, a substituted or unsubstituted C1-C3 alkyl group, a substituted or unsubstituted C1-C3 alkoxy group or an ether group, and at least one of $R_4$ to $R_7$ includes a substituted or unsubstituted C1-C3 alkoxy group or an ether group;

optionally, $R_4$ to $R_7$ each independently include a hydrogen atom, a substituted or unsubstituted C1-C2 alkyl group, a substituted or unsubstituted C1-C2 alkoxy group or an ether group, and at least one of $R_4$ to $R_7$ includes a substituted or unsubstituted C1-C2 alkoxy group or an ether group.

In some embodiments, the ether polymer includes at least one of structural units represented by Formula (II-1) to Formula (II-7):

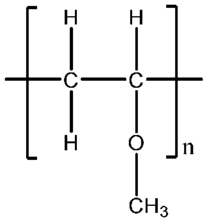 Formula (II-1), 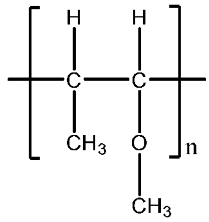 Formula (II-2),

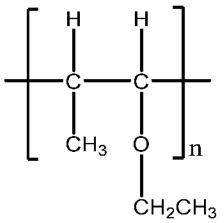 Formula (II-3), 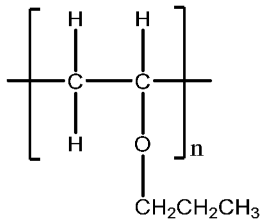 Formula (II-4),

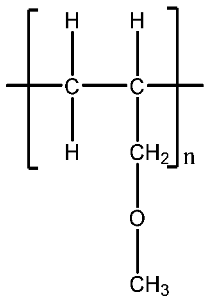 Formula (II-5), 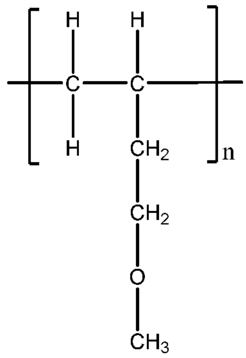 Formula (II-6),

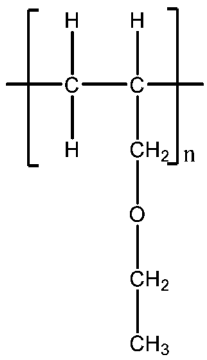 Formula (II-7).

The monomers forming the aforementioned ether polymers are those have polycyclic structures, for example, six- or less-membered ring structures, or short-chain monomers, which makes them easier to be polymerized to form -O- structures with a high content. Such types of structures have a low degree of entanglement, which is conducive to improved flexibility of the molecular chains, allowing the molecular chains to sufficiently stretch in the electrolytic solution and thereby further improving the interface properties of the active material.

The aforementioned polymers are merely some examples of structural groups constituting the main molecular chains. In the embodiments of the present application, the polymers may be a copolymer of the aforementioned structural groups with other types of structural groups (for example, olefin structural units, acrylonitrile structural units, etc.).

The groups of the polymers according to the present application can be detected using infrared spectroscopy (IR). Specifically, the polymers are tested using a Thermo Nicolet Nexus 670 attenuated total reflectance-Fourier transform infrared spectrometer (FTIR-ATR), and then tested in accordance with GB/T6040-2002, where the test range for the ATR method is 600 to 4000 $cm^{-1}$, the reproducibility is $\pm 2$ $cm^{-1}$, the resolution is higher than 4 $cm^{-1}$, and the penetration depth is 0.2 to 0.6 $\mu m$.

The structures of the polymers according to the present application can be tested using nuclear magnetic

resonance (NMR). Specifically, 1H NMR and 13C NMR are performed using a Varian Mercury Plus-400 nuclear magnetic resonance spectrometer, where the test temperature is 20°C, the internal standard substance is TMS, the solvent is $CDCl_3$, and the proton resonance frequency is 400 MHz.

The types of monomers of the polymers according to the present application (particularly applicable to monomers that account for a small proportion of the polymer) can be tested by a pyrolysis-type gas chromatograph mass spectrometer. Specifically, the test procedure is as follows. 0.5 mg of the sample is precisely weighed into a sample cup, which are then fixed to a feed rod, and the feed rod is inserted into a pyrolyzer installed in the vicinity of the GC (gas chromatography) feed port. After the temperature of the pyrolyzer reaches a set temperature, a feed button is pressed to enable rapid free fall of the sample cup into the center of the pyrolyzer. Under an atmosphere of inert gas $N_2$, volatile components are instantly gasified, then carried by a carrier gas into a gas chromatography column for separation, and finally detected by a flame ionization detector (FID) or mass spectrometer (MS) to obtain a gas chromatogram or total ion chromatogram.

If the aforementioned groups are substituted, the substituents may include one or more of cyano group (-CN), nitro group, sulfonyl group, carboxyl group, ester group, chlorine atoms, fluorine atoms, and bromine atoms. The aforementioned substituents are high-pressure resistant substituents, which is further conducive to stabilizing the structure of the polymers.

In some embodiments, n is selected from positive integers in a range of 1500 to 25000.

Optionally, n is selected from positive integers in a range of 3000 to 18000.

In some embodiments, the molecular weight of the polymer is in a range of $1.2\times10^5$ g/mol to $1.0\times10^6$ g/mol.

The polymer, the molecular weight of which falls within the aforementioned ranges, can be ensured to be soluble to some degree in the electrolytic solution, yet resistant to complete dissolution or dispersion in the electrolytic solution, which is conducive to controlling the distribution and dispersion of the polymer on the surface of the active material. Additionally, the molecular chains of the polymer can become more flexible, and thus the force between the molecular chains is weakened, which is conducive to the solvent molecules in the electrolytic solution opening the molecular chains, entering between the molecular chains, and becoming wrapped by the molecular chains. Therefore, this facilitates the active ions entering the active material through the solvent and achieves smooth and quick transfer of active ions. For example, the molecular weight of the polymer may be $1.2\times10^5$ g/mol, $2\times10^5$ g/mol, $5\times10^5$ g/mol, $8\times10^5$ g/mol, $1\times10^6$ g/mol, or in a range consisting of any two of the aforementioned values.

The molecular weight of the ether polymer is understood in its well-known sense in the art, and can be measured using devices and methods common in the art. The molecular weight may be tested using gel permeation chromatography (GPC) and the specific test procedures are as follows. An appropriate amount of sample to be tested (with a concentration which ensures an opacity in the range of 8% to 12%) is added with 20 ml of deionized water, sonicated externally at the same time for 5 min (53KHz/120W) to ensure complete dispersion of the sample, and the sample is subsequently measured in accordance with standards GB/T19077-2016/ISO13320:2009.

Alternatively, tests are performed using a multi-angle laser light scattering detector (MALLS), particularly a device (Wyatt Technology Corporation, USA) combining GPC with a Dawn Heleos II multi-angle laser light scattering detector, an Optilab T-rEX refractive index (RI) detector, and a ViscoStar II viscometer. Tests are conducted at 30°, using tetrahydrofuran as the mobile phase at a flow rate of 1.0 ml/min. The SEC-SAMLL data is processed by commercial software ASTRA 6 to obtain the molecular weight parameters.

Positive electrode plate

A second aspect of the present application proposes a positive electrode plate comprising a positive electrode current collector and a positive electrode film layer disposed on the positive electrode current collector, the positive electrode film layer comprising a positive electrode active material and an ether polymer which includes an ether polymer according to any one of the embodiments of the first aspect of the present application.

For example, the positive electrode current collector has two surfaces opposing each other in its own thickness direction, and the positive electrode film layer is disposed on either one or both of the two opposing surfaces of the positive electrode current collector.

The electrode plate can be prepared by applying a slurry to the current collector, and then subjecting them to drying and cold rolling. Alternatively, the electrode plate originates from a battery cell, where the battery cell is disassembled to take the electrode plate impregnated in the electrolytic solution out from the battery cell, and after vacuum drying for 12h at 100°C, the electrode plate is prepared, which can be used for tests such as absorption rate or the like of the electrode plate.

The ether polymer can be synthesized by methods such as emulsion polymerization, suspension polymerization, bulk polymerization, solution polymerization, or the like. Alternatively, the ether polymer originates from a battery cell, where the battery cell is disassembled to take the electrode plate impregnated in the electrolytic solution out from the battery cell. Then the active material of the obtained electrode plate is peeled from the current collector by an external force to form a powder sample. This powder sample is subsequently added to dimethyl carbonate (DMC), stirred at 80°C for 8h at

500 rpm, and left to stand at room temperature for 10min. After standing, the supernatant is taken and dried at 80°C for 12h to obtain the ether polymer. The resulting ether polymer may contain a small amount of lithium salt, which hardly affects the infrared testing and the precipitation value testing, but for the sake of accuracy, the ether polymer may be further washed with DMC at room temperature to separate the lithium salt.

In some embodiments, the positive electrode active layer satisfies:

$$\lambda = 1 - \frac{P_1}{P_2} \quad \text{Mathematical Expression (1)}$$

$$v = \pi \times \left(\frac{d}{2}\right)^2 \times h \times \frac{\rho}{t} \quad \text{Mathematical Expression (2)}$$

$$v/\lambda > 1.00 \quad \text{Mathematical Expression (3)}$$

in which

λ denotes the porosity of the positive electrode active material layer,
$P_1$ denotes the actual compaction density of the positive electrode active material layer, which is in units of g/$cm^3$,
$P_2$ denotes the true compaction density of the positive electrode active material, which is in units of g/$cm^3$,
v denotes the absorption rate of the positive electrode active material layer, which is in units of mg/s,
d denotes the diameter of a capillary in a capillary test of the positive electrode active material layer, which is in units of mm,
h denotes the liquid level in the capillary, which is in units of mm,
ρ denotes the density of the electrolytic solution in the capillary test, which is in units of g/$cm^3$, and
t denotes the time taken for the electrolytic solution in the capillary to be absorbed, which is in units of s.

In the present application, the actual compaction density $P_1$ refers to the ratio of the mass of the positive electrode active material layer to its thickness per unit area in the electrode plate. The actual compaction density is determined by the force of the roller pressing on the electrode plate after applying process, which is in units of g/$cm^3$. Specifically, the test procedure is as follows: taking an electrode plate with a certain area S, weighing the mass M of its positive electrode active material layer, measuring the thickness D of the positive electrode active material layer, and calculating the actual compaction density which is equal to M/(S×D).

In the present application, the true compaction density $P_2$ refers to the density of the positive electrode active material in the positive electrode active material layer, and specifically refers to the mass per unit "actual volume of the solid material (not including open and closed pores or interparticle pores)" in a dense state. After the true volume V is tested, the true compaction density is calculated according to P = m/V. The test can be carried out in accordance with GB/T24586-2009, and the test procedure is specifically as follows:

1) pretreatment: placing a clean and dry sample cup on the balance, taring the balance, then adding a powder sample to the sample cup till about half the volume of the sample cup, and recording the mass of the sample;
2) placing the sample cup accommodating the sample in the true density tester, sealing the test system, introducing helium gas according to the program, and detecting the gas pressure in the sample chamber and the expansion chamber to calculate the true volume according to Bohr's law (PV = nRT), thereby calculating the true compaction density.

In the test, the volume of the sample cup is 3.5 $cm^3$, and the gas for analysis is helium gas.

According to Mathematical Expression (1), the porosity λ of the active material layer can be calculated using the actual compaction density and the true compaction density.

Specifically,

$$\lambda = \frac{V1 - V2}{V1} = 1 - \frac{V2}{V1} = 1 - \frac{m/V1}{m/V2} = 1 - \frac{P_1}{P_2}$$

in which V1 denotes the volume of the positive electrode active material layer at the mass m, which is in units of $cm^3$; V2 denotes the volume of the active particles in the positive electrode active material layer at the mass m, which is in

units of $cm^3$;
m denotes the mass of the positive electrode active material layer, which is in units of g.

Mathematical Expression (2) can characterize the speed at which a certain point on the electrode plate substantially completely absorbs the liquid (e.g., electrolytic solution) in the capillary per unit time. **In** the present application, a certain point on the electrode plate refers to a region of the electrode plate with a certain area corresponding to the cross-sectional area of the capillary.

In the present application, the method for detecting the absorption rate of the electrode plate involves the following steps:

using a capillary to suck a predetermined amount of electrolytic solution;
bringing the capillary into contact with the electrode plate so that the electrode plate to be tested absorbs the electrolytic solution in the capillary through the capillary action;
after a predetermined time t elapses, recording the liquid level h of the electrolytic solution that has been absorbed in the capillary, calculating the amount of electrolytic solution absorbed based on the liquid level h and diameter d of the capillary and the density ρ of the electrolytic solution, and quantitatively calculating the absorption rate v of the electrode plate according to the ratio of the absorbed amount to the predetermined time t.

For example, d takes values from 0.2 to 1, for example a value of 0.2, and h takes values from 3 to 5, for example a value of 3.

The capillary has capillary bores, which makes it possible for the capillary to directly absorb the electrolytic solution through the capillary action without requiring a driving force for absorbing the electrolytic solution from an external driving means. In this way, when the electrolytic solution is absorbed through the capillary action, the amount of electrolytic solution absorbed can be controlled more accurately. On the other hand, since the electrode plate absorbs the electrolytic solution through its own capillary action, the electrolytic solution in the capillary is absorbed by the electrode plate only when the electrode plate to be tested and the capillary are in contact, and no longer flows out when they are separated. Therefore, it is possible to accurately reflect that the electrode plate has absorbed the corresponding volume of electrolytic solution according to the amount of electrolytic solution absorbed in the capillary, further improving the accuracy of the test result and achieving quantitative calculation of the absorption rate at which the electrode plate absorbs the electrolytic solution.

In the present application, the test is carried out with the standard electrolytic solution as the test sample, and the formulation of the electrolytic solution in the embodiments can be referred to regarding the specific formulation of the electrolytic solution.

Mathematical Expression (3) shows the absorption rate of the electrode plate at the porosity λ, and can characterize the absorption rate of the electrode plate.

The ether polymer according to the present application is introduced during the manufacturing process of the active material layer, and thus can form uniform, well-infiltrated points at the interior of the active material layer, which uniformly improves the infiltration property of the active material layer, increases the absorption rate of the entire active material layer, and hence enhances the cycle performance of the battery cell using the electrode plate.

Optionally, $1.00 < v/\lambda < 50.00$.

In some embodiments, $1.00 < v/\lambda < 4.00$, and optionally, $1.20 \leq v/\lambda \leq 3.80$, and further optionally, $1.4 \leq v/\lambda \leq 3.6$. For example, $v/\lambda$ may be 1.20, 1.40, 1.80, 2.00, 2.50, 3.00, 3.50, 3.60, 3.80, 3.90, or in a range consisting of any two of the aforementioned values.

In some embodiments, based on the mass of the positive electrode active material layer, the mass percent of the ether polymer is A%, where $0.1 \leq A \leq 1.5$.

The ether polymer, the mass percent of which falls within the aforementioned range, can significantly improve the interface properties of the positive electrode active material layer. For example, the mass percent of the ether polymer may be 0.1%, 0.2%, 0.5%, 0.8%, 1.0%, 1.2%, 1.5%, or in a range consisting of any two of the aforementioned values.

The positive electrode film layer comprises a positive electrode active material which can employ any positive electrode active material for use in battery cells well known in the art. For example, the positive electrode active material may include at least one of the following materials: layered-structure positive electrode active materials (e.g., ternary materials, lithium/sodium nickelate, lithium/sodium cobaltate, lithium/sodium manganate, lithium-rich layered materials, and rock salt phase layered materials, etc.), olivine-type phosphate active materials, and spinel-structure positive electrode active materials (e.g., spinel lithium manganate, spinel lithium nickel manganate, lithium-rich spinel lithium manganate, and lithium nickel manganate, etc.).

For example, the general formula of the layered-structure positive electrode active materials is: $Li_xA_yNi_aCo_bMn_cM_{(1-a-b-c)}Y_z$, in which, $0 \leq x \leq 2.1$, $0 \leq y \leq 2.1$, and $0.9 \leq x + y \leq 2.1$; $0 \leq a \leq 1$, $0 \leq b \leq 1$, $0 \leq c \leq 1$, and $0.1 \leq a + b + c \leq 1$; $1.8 \leq z \leq 3.5$; A is selected from one or more of Na, K, and Mg; M is selected from one or more of B, Mg, Al, Si, P, S,

Ca, Sc, Ti, V, Cr, Fe, Cu, Zn, Sr, Y, Zr, Nb, Mo, Cd, Sn, Sb, Te, Ba, Ta, W, Yb, La, and Ce; Y is selected from one or more of O and F. Optionally, y = 0. Specifically, the layered-structure positive electrode active materials may comprise one or more of lithium cobalt oxide (LCO), lithium nickel oxide (LNO), lithium manganese oxide (LMO), $LiNi_{1/3}Co_{1/3}Mn_{1/3}O_2$ (NCM333), $LiNi_{0.8}Co_{0.1}Mn_{0.1}O_2$ (NCM811), and $LiNi_{0.5}Co_{0.2}Mn_{0.3}O_2$ (NCM523).

For example, the general formula of olivine-type phosphate active materials is: $Li_xA_yMe_aM_bP_{1-c}X_cY_z$, in which, $0 \leq x \leq 1.3$, $0 \leq y \leq 1.3$, and $0.9 \leq x + y \leq 1.3$; $0.9 \leq a \leq 1.5$, $0 \leq b \leq 0.5$, and $0.9 \leq a + b \leq 1.5$; $0 \leq c \leq 0.5$; $3 \leq z \leq 5$; A is selected from one or more of Na, K, and Mg; Me is selected from one or more of Mn, Fe, Co, and Ni; M is selected from one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is selected from one or more of S, Si, Cl, B, C, and N; Y is selected from one or more of O and F. Specifically, olivine-type phosphate active materials comprise one or more of $LiFePO_4$, $LiMnPO_4$, $LiNiPO_4$, and $LiCoPO_4$.

For example, the general formula for spinel-structure positive electrode active materials is: $Li_xA_yMn_aM_{2-a}Y_z$, in which, $0 \leq x \leq 2$, $0 \leq y \leq 1$, and $0.9 \leq x+y \leq 2$, $0.5 \leq a \leq 2$, $3 \leq z \leq 5$, A is selected from one or more of Na, K, and Mg, M is selected from one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce, and Y is selected from one or more of O and F. Specifically, the spinel-structure positive electrode active materials include one or more of $LiMn_2O_4$, $LiNi_{0.5}Mn_{1.5}O_4$, $LiCr_{0.3}Mn_{1.7}O_4$, $Li_{1.1}Al_{0.1}Mn_{1.9}O_4$, $Li_2Mn_2O_4$, and $Li_{1.5}Mn_2O_4$.

In some embodiments, the positive electrode current collector may be a metal foil or a composite current collector. Examples of metal foils include aluminum foil or aluminum alloy foil. The composite current collector may comprise a polymer material base layer, and a metal material layer formed on at least one surface of the polymer material base layer. For example, the metal material may include one or more of aluminum, aluminum alloy, nickel, nickel alloy, titanium, titanium alloy, silver, and silver alloy, and the polymer material base layer may include one or more of polypropylene (PP), polyethylene terephthalate (PET), polybutylene terephthalate (PBT), polystyrene (PS), and polyethylene (PE).

In some embodiments, the positive electrode film layer further optionally includes a conductive agent for positive electrode. In the present application, the type of the conductive agent for positive electrode is not particularly limited, and for example, the conductive agent for positive electrode include one or more of superconducting carbon, conductive carbon black, conductive graphite, acetylene black, carbon black, ketjen black, carbon dots, carbon nanotubes, graphene, and carbon nanofibers. In some embodiments, based on the total mass of the positive electrode film layer, the mass percent of the positive electrode conductive agent is 5% or less.

In some embodiments, the positive electrode film layer further optionally includes a binder for positive electrode. In the present application, the type of the binder for positive electrode is not particularly limited, and for example, the binder for positive electrode may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoro-containing acrylate-based resin. In some embodiments, based on the total mass of the positive electrode film layer, the mass percent of the binder for positive electrode is 5wt% or less.

The positive electrode film layer is generally formed by applying a positive electrode slurry to a positive electrode current collector and then subjecting them to drying and cold rolling. The positive electrode slurry is typically formed by dispersing a positive electrode active material, an optional conductive agent, an optional binder, and any other components in a solvent and stirring uniformly. The solvent may be, but is not limited to, N-methylpyrrolidone (NMP).

Negative electrode plate

A third aspect of the present application provides a negative electrode plate comprising a negative electrode current collector and a negative electrode film layer disposed on the negative electrode current collector, the negative electrode film layer comprising a negative electrode active material and an ether polymer which comprises an ether polymer according to any one of the embodiments of the first aspect of the present application.

For example, the negative electrode current collector has two surfaces opposing each other in its own thickness direction, and the negative electrode film layer is disposed on one or both of the two opposing surfaces of the negative electrode current collector.

In some embodiments, the negative electrode active material layer satisfies:

$$v/\lambda > 1.00 \quad \text{Mathematical Expression (4)}$$

in which,

λ denotes the porosity of the negative electrode active material layer,
v denotes the absorption rate of the negative electrode active material layer, which is in units of mg/s.

The methods for detecting $\lambda$ and v are as described in the positive electrode active material layer and will not be repeated herein.

In some embodiments, $3.00 < v/\lambda < 50.00$, and optionally $3.40 \leq v/\lambda \leq 30.00$. For example, $v/\lambda$ may be 3.20, 3.40, 3.50, 4.00, 4.50, 5.00, 5.50, 6.00, 6.50, 7.00, 8.00, 9.00, 9.50, 10.00, 10.50, 11.00, 12.00, 13.00, 14.00, or in a range consisting of any two of the aforementioned values.

In some embodiments, based on the mass of the negative electrode active material layer, the mass percent of the ether polymer is B%, where $0.2 \leq B \leq 5.0$.

The ether polymer, the mass percent of which falls within the aforementioned range, can significantly improve the interface properties of the negative electrode active material layer. For example, the mass percent of the ether polymer may be 0.2%, 0.5%, 0.8%, 1.0%, 1.2%, 1.5%, 2.0%, 2.5%, 3.0%, 3.5%, 4.0%, 4.5%, 5.0%, or in a range consisting of any two of the aforementioned values.

In some embodiments, the negative electrode current collector may be a metal foil or a composite current collector. For example, as a metal foil, a copper foil may be used. The composite current collector may include a polymer material base layer and a metal layer formed on at least one surface of the polymer material base layer. The composite current collector may be prepared by forming metal materials (copper, copper alloys, nickel, nickel alloys, titanium, titanium alloys, silver, and silver alloys, etc.) on a polymer material substrate (e.g., substrates such as polypropylene (PP), polyethylene terephthalate (PET), polybutylene terephthalate (PBT), polystyrene (PS), and polyethylene (PE), etc.).

In some embodiments, the negative electrode active material may employ a negative electrode active material well known in the art for the use in a battery. For example, the negative electrode active material may include at least one of following materials: natural graphite, artificial graphite, soft carbon, hard carbon, silicon-based material, tin-based material, and lithium titanate, etc. The silicon-based material may include at least one of elemental silicon, silicon oxide compounds, silicon-carbon composites, silicon-nitrogen composites, and silicon alloys. The tin-based material may include at least one of elemental tin, tin oxide compounds, and tin alloys. **In** the present application, the negative electrode active material is not limited to these materials, and other conventional materials that can be used as negative electrode active materials for batteries may be used. These negative electrode active materials may be used alone or in combination of two or more.

In some embodiments, the negative electrode film layer further optionally includes a binder for negative electrode. The binder for negative electrode may include at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may include at least one of superconducting carbon, acetylene black, carbon black, ketjen black, carbon dots, carbon nanotubes, graphene, and carbon nanofibers.

In some embodiments, the negative electrode film layer may further optionally include other additives, such as a thickener (e.g., sodium carboxymethyl cellulose (CMC-Na)).

In some embodiments, the negative electrode plate can be prepared through the following steps: dispersing the aforementioned components for preparing a negative electrode plate, such as the negative electrode active material, the ether polymer, the conductive agent, the binder, and any other components, in a solvent (e.g., deionized water) to form a negative electrode slurry, and applying the negative electrode slurry, after which processes such as drying, cold pressing, etc. are carried out to prepare the negative electrode plate.

Battery cell

A fourth aspect of the present application provides a battery cell comprising a positive electrode plate, a negative electrode plate, and a separator disposed between the positive electrode plate and the negative electrode plate. The battery cell may be a lithium-ion battery or the like.

In some embodiments, the positive electrode plate may employ the positive electrode plate according to any one of the embodiments of the second aspect of the present application, thereby improving the cycle performance of the battery cell. The negative electrode plate may employ a conventional negative electrode plate.

In some other embodiments, the negative electrode plate may employ the negative electrode plate according to any one of the embodiments of the third aspect of the present application, thereby improving the cycle performance of the battery cell. The positive electrode plate may employ a conventional positive electrode plate.

In yet another embodiment, the positive electrode plate may employ the positive electrode plate according to any one of the embodiments of the second aspect of the present application, and the negative electrode plate may employ the negative electrode plate according to any one of the embodiments of the third aspect of the present application, thereby improving the cycle performance of the battery cell.

[Electrolyte]

The battery cell further includes an electrolyte that plays a role of conducting ions between the positive electrode plate and the negative electrode plate. In the present application, the type of electrolyte is not particularly limited and may be selected as needed. For example, the electrolyte may be liquid, gel, or all solid.
In some embodiments, the electrolyte employs the electrolytic solution. The electrolytic solution includes electrolyte salts and solvents.
For example, the lithium salts may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl) imide (LiFSI), lithium bis(trifluoromethanesulfonyl)imide (LiTFSI), lithium trifluoromethanesulfonate (LiTFS), lithium borate difluorooxalate (LiDFOB), lithium bis(oxalato)borate (LiBOB), lithium difluorophosphate ($LiPO_2F_2$), lithium difluorobis(oxalatophosphate) (LiDFOP) and lithium tetrafluorooxalatophosphate (LiTFOP).
For example, the organic solvents may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).
In some embodiments, the electrolytic solution further optionally includes additives. For example, the additives may include negative electrode film-forming additives or positive electrode film-forming additives, and may further include additives capable of improving some properties of the battery, such as the overcharge properties of the battery, the high-temperature properties of the battery, or the low-temperature properties of the battery.

[Separator]

In some embodiments, the battery cell further includes a separator. In the present application, the type of the separator is not particularly limited, and any well-known porous separator having good chemical stability and mechanical stability can be used.
In some embodiments, the material of the separator may include one or more of glass fiber, nonwoven fabric, polyethylene, polypropylene, and polyvinylidene fluoride. The separator may be a single-layer film or a multi-layer composite film. If the separator is a multi-layer composite film, the materials of respective films may be the same or different.
In some embodiments, an electrode assembly can be formed by performing a wrapping process or a stacking process on the positive electrode plate, the separator, and the negative electrode plate.
In the present application, the shape of the battery cell is not particularly limited, and may be cylindrical, rectangular, or any other shape. FIG. 1 shows a battery cell 5 having a rectangular structure as an example.
In some embodiments, as shown in FIG. 1 and FIG. 2, the exterior package may include a casing 51 and a cover plate 53, wherein the casing 51 may include a bottom plate and side plates connected to the bottom plate, and the bottom plate and the side plates are enclosed to form a receiving cavity. The casing 51 has an opening communicating with the receiving cavity, and the cover plate 53 covers the opening so as to seal the receiving cavity. The electrode assembly 52 can be formed by performing a wrapping process and/or a stacking process on the positive electrode plate, the negative electrode plate, and the separator. The electrode assembly 52 is packaged in the receiving cavity. The electrolytic solution infiltrates into the electrode assembly 52. The number of electrode assemblies 52 included in the battery cell 5 may be one or more, and may be increased or decreased as needed.
The method for preparing the battery cell according to the present application is a well-known method. In some embodiments, the battery cell is prepared by assembling a positive electrode plate, a separator, a negative electrode plate, and the electrolytic solution. For example, the positive electrode plate, the separator, and the negative electrode plate may undergo a wrapping process and/or a stacking process to prepare form an electrode assembly. The prepared electrode assembly is placed in an exterior package, dried, and then injected with the electrolytic solution, after which the processes such as vacuum sealing, standing, formation, and shaping are carried out to prepare the battery cell.
In some embodiments of the present application, a battery module can be prepared by assembling the battery cells according to the present application. The number of battery cells included in the battery module may be more than one, and may be specifically increased or decreased depending on the application and capacity of the battery module.
FIG. 3 is a schematic diagram of a battery module 4 as an example. As shown in FIG. 3, in the battery module 4, a plurality of the battery cells 5 may be arranged in sequence along the longitudinal direction of the battery module 4. Of course, they may be arranged in any other manner. Furthermore, a plurality of the battery cells 5 may be fixed by fasteners.
Optionally, the battery module 4 may further include an enclosure having an accommodating space in which a plurality of the battery cells 5 are accommodated.

In some embodiments, a battery pack may be prepared by assembling the battery modules described above. The number of battery modules included in the battery pack may be increased or decreased depending on the application and capacity of the battery pack.

Both the battery module 4 and the battery pack can be used as specific examples of the battery according to the present application.

FIGS. 4 and 5 are schematic diagrams of a battery pack 1 as an example. As shown in FIG. 4 and FIG. 5, the battery pack 1 may include a battery case and a plurality of battery modules 4 provided in the battery case. The battery case includes an upper case body 2 and a lower case body 3, and the upper case body 2 is provided to cover the lower case body 3 to form a closed space for accommodating the battery modules 4. A plurality of battery modules 4 may be arranged in the battery case in any manner. Electrical Device

A fifth aspect of the present application provides an electrical device comprising at least one of the battery cell, the battery module, and the battery pack according to the present application. The battery cell, battery module, and battery pack may function as a power source for the electrical device, or may function as an energy storage means for the electrical device. The electrical device may be, but is not limited to, portable devices (e.g., a mobile phone, a laptop, etc.), electric vehicles (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, etc.

The electrical device may select the battery cell, the battery module, or the battery pack according to its usage needs. FIG. 6 is a schematic diagram of an electrical device as an example. The electrical device 6 is a pure electric vehicle, a hybrid electric vehicle, a plug-in hybrid electric vehicle, etc. A battery pack 1 or a battery module may be adopted to satisfy the requirements for high power output and high energy density of the electrical device. Another example of the electrical device may be a mobile phone, a tablet computer, a laptop, etc. Typically, such electrical devices are required to be light and thin, and thus can use the battery cell as the power source.

## Examples

Hereinafter, the embodiments of the present application will be described. The embodiments described below are merely illustrative for interpreting the present application, and should not be construed as limitations to the present application. Unless otherwise specified, the techniques or conditions in the embodiments conform to the techniques or conditions described in the literatures in this filed, or the product specifications. Unless the manufacturer is specified, the reagents or instruments used are all conventional products that are commercially available.

### Example 1

(1) Preparation of positive electrode plate

An aluminum foil with a thickness of 12μm was used as the positive electrode current collector.

An ether polymer, $LiFePO_4$ as a positive electrode active material, carbon black as a conductive agent, and polyvinylidene fluoride (PVDF) as an binder were added to N-methylpyrrolidone (NMP) to prepare a positive electrode slurry. The mass ratio of the ether polymer, $LiFePO_4$, the conductive carbon black, the PVDF, and the N-methylpyrrolidone (NMP) in the positive electrode slurry was 0.5:96.8:2:0.7:29. This positive electrode slurry was applied to an aluminum foil as the current collector, dried at 85°C, subjected to cold pressing, trimming, slicing, and striping, and then vacuum dried at 85°C for 4h to prepare the positive electrode plate.

(2) Preparation of negative electrode plate

A copper foil with a thickness of 8μm was used as the negative electrode current collector.

An ether polymer, artificial graphite as the negative electrode active material, carbon black as the conductive agent, styrene butadiene rubber (SBR) as the binder, sodium hydroxymethylcellulose (CMC) as the thickener, and deionized water were uniformly mixed at a weight ratio of 2.5:94:0.5:2:1:100 to prepare a negative electrode slurry. This negative electrode slurry was applied to copper foil as the current collector, dried at 85°C, subjected to cold pressing, trimming, slicing, and striping, and then vacuum dried at 120°C for 12h to prepare the negative electrode plate.

(3) Preparation of electrolytic solution

Under an environment with a water content of less than 10ppm, ethylene carbonate (EC) and ethyl methyl carbonate (EMC), which are non-aqueous organic solvents, were mixed at a volume ratio of 3:7 to prepare a solvent for electrolytic solution, which was then mixed with lithium salt $LiPF_6$ to prepare an electrolytic solution with a lithium salt

concentration of 1mol/L.

(4) Preparation of lithium-ion battery

A polyethylene film (PE) with a thickness of 16μm was used as the separator. The positive electrode plate, the separator, and the negative electrode plate mentioned above were stacked in order such that the separator was located between the positive electrode plate and the negative electrode plate to provide a separation function, and afterwards they are wrapped to prepare an electrode assembly. The prepared electrode assembly was placed in an exterior package, dried, and then injected with the electrolytic solution, after which processes such as vacuum packaging, standing, formation, and shaping were carried out to prepare the lithium-ion battery.

**Comparative Example 1**

A lithium-ion battery was prepared in the similar manner to that of Example 1, except that neither the positive electrode plate nor the negative electrode plate contained the ether polymer in Comparative Example 1.

**Comparative Example 2**

A lithium-ion battery was prepared in the similar manner to that of Example 1, except that the materials of the ether polymers in the positive electrode plate and the negative electrode plate were changed in Comparative Example 2.

**Example 2 to Example 4**

Lithium-ion batteries were prepared in the similar manner to that of Example 1, except that the materials of the ether polymers in the positive electrode plate and the negative electrode plate were changed in Example 2 to Example 4.

**Example 5**

A lithium-ion battery was prepared in the similar manner to that of Example 1, except that the positive electrode plate contained the ether polymer while the negative electrode plate did not contain the ether polymer in Example 5.

**Example 6 to Example 9**

Lithium-ion batteries were prepared in the similar manner to that of Example 1, except that the contents of the ether polymers in the positive electrode plate were changed in Example 6 to Example9.

**Example 10 to Example 12**

Lithium-ion batteries were prepared in the similar manner to that of Example 1, except that the contents of the ether polymers in the negative electrode plate were changed in Example 10 to Example 12.
Data for the examples and comparative examples are shown in Table 1.

**Test Section**

1. Test of capacity retention rate of lithium-ion battery

The aforementioned lithium-ion batteries prepared in the examples and comparative examples were charged to 4.25V by equivalent 1.2C step charge under a room temperature environment, then charged at a constant voltage of 4.25V until the current reached 0.05C, left for 5min, and then discharged to 2.8V at 0.33C. In this case, the resulting capacity was recorded as the initial capacity C0, and the initial clamping force of the lithium-ion battery was set to 10000N. The above steps were repeated for the same battery, and at the same time, the discharge capacity Cn of the battery after the $n^{th}$ cycle was recorded. The capacity retention rate of the battery after each cycle was calculated by Pn=Cn/C0*100%. With the values of the 200 points including P1, P2....P200 as the ordinate and the corresponding cycle number as the abscissa, a graph showing the capacity retention rate of the battery and number of cycles corresponding to the ether polymers of the examples and comparative examples can be obtained.
During the test, the first cycle corresponds to n=1, the second cycle corresponds to n=2, ... and the 200th cycle corresponds to n=200. For example, the datum of the capacity retention rate of the battery corresponding to Example 1 shown in Table 1 is the data measured after 200 cycles under the aforementioned test conditions, i.e., the value of P200.

The test procedures for Comparative Example 1 and other examples were the same as those described above.

2. Test of direct current impedance of lithium-ion battery

The aforementioned lithium-ion batteries prepared in the examples and comparative examples were charged to 4.25V at 25°C by equivalent 1.2C step charge, then charged at a constant voltage of 4.25V until the current reached 0.05C, and then left for 5min to record the voltage V1. Afterwards, the batteries were discharged at 1/3C for 30s to record the voltage V2, and the internal resistance DCR1 of the battery after the first cycle was calculated based on (V3-V2)/1/3C. The aforementioned steps were repeated for the same battery, and the internal resistance DCRn (n=1, 2, 3...200) of the battery after the $n^{th}$ cycle were recorded at the same time. With the values of the 200 points including the above DCR1, DCR2, DCR3...DCR200 taken as the ordinate and the corresponding cycle number as the abscissa, a graph showing the battery discharge DCIR and the number of cycles corresponding to the polymers of the examples and comparative examples was obtained.

During the test, the first cycle corresponds to n=1, the second cycle corresponds to n=2, ... the 200th cycle corresponds to n=200. For example, the increase rate of the internal resistance of the battery in Example 1 being equal to (DCRn-DCR1)/DCR1*100% shown in Table 1, and the test procedures of Comparative Example 1 and other examples were the same as those described above. The datum shown in Table 1 were measured after 200 cycles under the above test conditions.

Test Results

Table 1

| Item | Ether polymer | | | | | | Positive electrode plate | | | | Negative electrode plate | | | | Lithium-ion battery | |
|---|---|---|---|---|---|---|---|---|---|---|---|---|---|---|---|---|
| | Monomer 1 | Monomer 2 | Glass transition temperature Tg (°C) | Molecular weight (g/mol) | K | Precipitation value m/n | Mass percent A % | λ | V(mg/s) | v/λ | Mass percent B % | λ | v (mg/s) | v/λ | Capacity retention rate% | DCIR % |
| Comparative Example 1 | / | / | / | / | / | / | / | 24.8% | 0.18 | 0.73 | / | 29.0% | 0.50 | 1.72 | 80 | 25 |
| Comparative Example 2 | 100%Ethylene oxide | / | -67 | 400,000 | 1.8 | 1.5 | 0.5 | 24.8% | 0.20 | 0.81 | 2.5 | 29.0% | 0.52 | 1.79 | 81 | 24 |
| Example 1 | 80%Ethylene oxide | 20%oxirane-2-ethyl ester | -45 | 250,000 | 1.2 | 12 | 0.5 | 24.8% | 0.52 | 2.10 | 2.5 | 29.0% | 5.60 | 19.31 | 87 | 13 |
| Example 2 | 90%Ethylene oxide | 10% oxi-rane-2-car-boxylic acid | -12 | 250,000 | 1.1 | 7 | 0.5 | 24.8% | 0.45 | 2.02 | 2.5 | 29.0% | 4.00 | 13.80 | 85 | 15 |
| Example 3 | 88%Ethyl vinyl ether | 12%vinyl acetate | 0 | 300,000 | 1.6 | 15 | 0.5 | 27.9% | 0.38 | 1.36 | 2.5 | 33.3% | 2.70 | 8.11 | 84 | 16 |
| Example 4 | 100%Ethylene oxide | / | -65 | 200,000 | 1.3 | 10 | 0.5 | 27.9% | 0.50 | 1.79 | 2.5 | 33.3% | 5.00 | 16.80 | 90 | 10 |
| Example 5 | 80%Ethylene oxide | 20%oxirane-2-ethyl ester | -45 | 250,000 | 1.2 | 12 | 0.5 | 24.8% | 0.52 | 2.10 | 0 | 29.0% | 0.50 | 1.72 | 85 | 18 |
| Example 6 | 80%Ethylene oxide | 20%oxirane-2-ethyl ester | -45 | 250,000 | 1.2 | 12 | 0 | 24.8% | 0.18 | 0.73 | 2.5 | 29.0% | 5.60 | 19.31 | 87 | 15 |
| Example 7 | 100%Ethylene oxide | / | -65 | 200,000 | 1.3 | 10 | 0.1 | 24.8% | 0.20 | 0.81 | 2.5 | 29.0% | 5.00 | 16.80 | 88 | 13 |
| Example 8 | 100%Ethylene oxide | / | -65 | 200,000 | 1.3 | 10 | 1.5 | 24.8% | 0.80 | 3.23 | 2.5 | 29.0% | 5.00 | 16.80 | 91 | 9 |
| Example 9 | 100%Ethylene oxide | / | -65 | 200,000 | 1.3 | 10 | 2.0 | 24.8% | 1.20 | 4.84 | 2.5 | 29.0% | 5.00 | 16.80 | 87 | 14 |
| Example 10 | 100%Ethylene oxide | / | -65 | 200,000 | 1.3 | 10 | 0.5 | 24.8% | 0.50 | 1.79 | 0.2 | 29.0% | 3.00 | 10.30 | 88 | 15 |

(continued)

| Item | Ether polymer | | | | | | Positive electrode plate | | | | Negative electrode plate | | | | Lithium-ion battery | |
|---|---|---|---|---|---|---|---|---|---|---|---|---|---|---|---|---|
| | Monomer 1 | Monomer 2 | Glass transition temperature Tg (°C) | Molecular weight (g/mol) | K | Precipitation value m/n | Mass percent A % | λ | V(mg/s) | v/λ | Mass percent B % | λ | v (mg/s) | v/λ | Capacity retention rate% | DCIR % |
| Example 11 | 100%Ethylene oxide | / | -65 | 200,000 | 1.3 | 10 | 0.5 | 24.8% | 0.50 | 1.79 | 5.0 | 29.0% | 7.00 | 24.14 | 92 | 8 |
| Example 12 | 100%Ethylene oxide | / | -65 | 200,000 | 1.3 | 10 | 0.5 | 24.8% | 0.50 | 1.79 | 6.0 | 29.0% | 10.00 | 34.50 | 87 | 16 |

In Table 1, 100% ethylene oxide refers to the mass percent of ethylene oxide being 100% based on the total mass of the monomer 1 and the monomer 2.

80% ethylene oxide refers to the mass percent of ethylene oxide being 80% based on the total mass of the monomer 1 and the monomer 2, and 20% oxirane-2-ethyl ester refers to the mass percent of oxirane-2-ethyl ester being 20% based on the total mass of the monomer 1 and the monomer 2.

As can be seen from Table 1, compared to Comparative Example 1, in the examples of the present application, the positive electrode plates and/or negative electrode plates are added with the ether polymer according to the present application, showing enhanced cycle performance of the lithium-ion battery. Compared with Comparative Example 2, when $5 \leq m/n \leq 1000$ and $10 \leq m/n \leq 50$ are satisfied in the examples of the present application, the molecular chains tend to be loosely arranged with weaker intermolecular forces, and the adjacent molecular chains are easily separated, and chain segment movement is achieved through intermolecular rotation, forming a molecular chain structure with high flexibility, which can significantly enhance the cycle performance of the lithium-ion battery.

While the present application has been described with reference to preferred embodiments, various modifications may be made thereto and components therein may be replaced with equivalents without departing from the scope of the present application. In particular, the technical features mentioned in the various embodiments can be combined in any manner as long as there is no structural conflict. The present application is not limited to the specific embodiments disclosed herein, but includes all technical solutions falling within the scope of the claims.

## Claims

1. An ether polymer for use in a battery cell, the ether polymer satisfying $5 \leq m/n \leq 1000$,

   in which n denotes a mass of the ether polymer in units of g, and
   m denotes a mass of a first substance in units of g, which is obtained by adding the ether polymer in a mass of n grams to a first solvent at 45°C to form an ether polymer system, allowing the ether polymer system to stand at 45°C for 8h and then at 25°C for ≥24h, and filtering the ether polymer system through a 200-mesh filter to leave a filtered-out substance as the first substance.

2. The ether polymer according to claim 1, wherein $10 \leq m/n \leq 1000$, further optionally, $10 \leq m/n \leq 50$.

3. The ether polymer according to claim 1 or 2, wherein the first solvent includes cyclic carbonate solvents and/or chain carbonate solvents;

   optionally, the cyclic carbonate solvents include one or more of ethylene carbonate (EC), vinylene carbonate (VC), fluoroethylene carbonate (FEC), difluoroethylene carbonate (DFEC), vinyl ethylene carbonate (VEC), and dioctyl carbonate (CC);
   optionally, the chain carbonate solvents include one or more of dimethyl carbonate (DMC), diethyl carbonate (DEC), ethyl methyl carbonate (EMC), diphenyl carbonate (DPC), methyl allyl carbonate (MAC), and polycarbonate (VA).

4. The ether polymer according to any one of claims 1 to 3, wherein the ether polymer has a slope K of an elastic modulus G'-loss modulus G" curve, and $1 < K < \infty$, where the elastic modulus G'-loss modulus G" curve is obtained by subjecting a sheet-like structure made of the ether polymer to a dynamic frequency sweep test at $(T_m+20)$ °C, $T_m$, °C denoting a melting temperature of the ether polymer.

5. The ether polymer according to any one of claims 1 to 4, wherein the glass transition temperature of the ether polymer is Tg, which is in units of °C, and $-100 \leq Tg \leq 50$, optionally, $-80 \leq Tg \leq 30$.

6. The ether polymer according to any one of claims 1 to 5, wherein the ether polymer includes structural units represented by Formula (I):

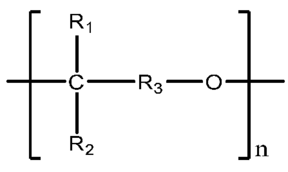

Formula (I)

in which

R$_1$ and R$_2$ each independently include a hydrogen atom, a substituted or unsubstituted C1-C3 alkyl group, or a substituted or unsubstituted C1-C3 alkoxy group; R$_3$ includes a substituted or unsubstituted C1-C5 methylene group;
optionally, R$_1$ and R$_2$ each independently include a hydrogen atom, a substituted or unsubstituted C1-C2 alkyl group, and/or R$_3$ includes a single bond, a substituted or unsubstituted C1-C4 methylene group.

**7.** The ether polymer according to claim 6, wherein the ether polymer includes at least one of structural units represented by Formula (I-1) to Formula (I-8):

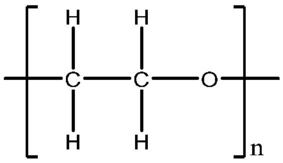 Formula (I-1), 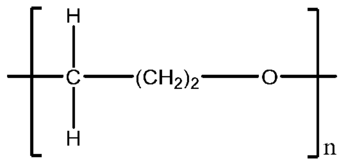 Formula (I-2),

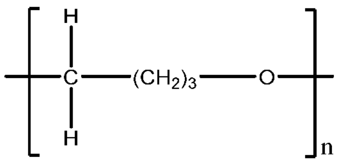 Formula (I-3), 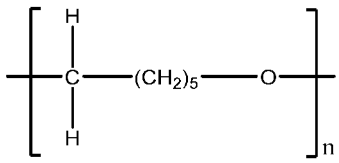 Formula (I-4),

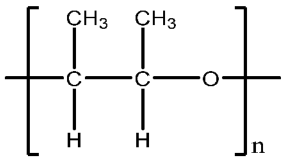 Formula (I-5), 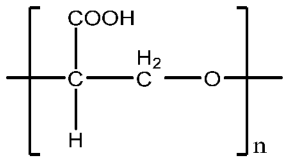 Formula (I-6),

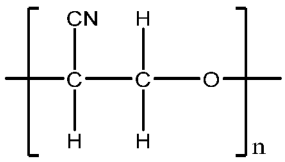 Formula (I-7), 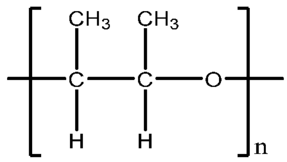 Formula (I-8).

**8.** The ether polymer according to any one of claims 1 to 7, wherein the ether polymer includes structural units represented by Formula (II):

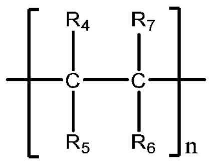 Formula (II)

in which

R$_4$ to R$_7$ each independently include a hydrogen atom, a substituted or unsubstituted C1-C3 alkyl group, a substituted or unsubstituted C1-C3 alkoxy group or an ether group, and at least one of R$_4$ to R$_7$ includes a substituted or unsubstituted C1-C3 alkoxy group or an ether group;
optionally, R$_4$ to R$_7$ each independently include a hydrogen atom, a substituted or unsubstituted C1-C2 alkyl group, a substituted or unsubstituted C1-C2 alkoxy group or an ether group, and at least one of R$_4$ to R$_7$ includes a substituted or unsubstituted C1-C2 alkoxy group or an ether group.

**9.** The ether polymer according to claim 8, wherein the ether polymer includes at least one of structural units represented by Formula (II-1) to Formula (II-7):

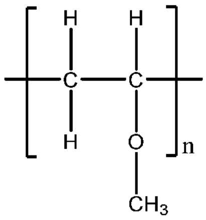 Formula (II-1), 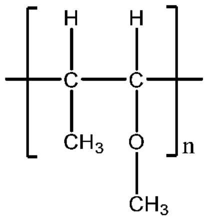 Formula (II-2),

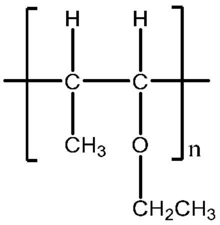 Formula (II-3), 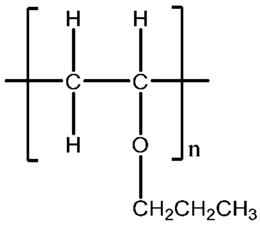 Formula (II-4),

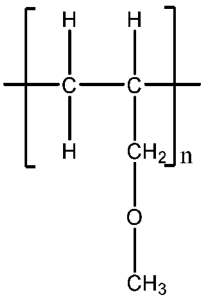 Formula (II-5), 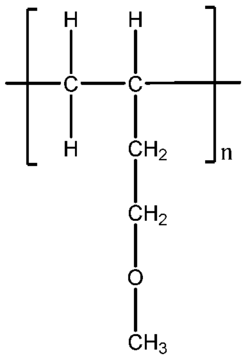 Formula (II-6),

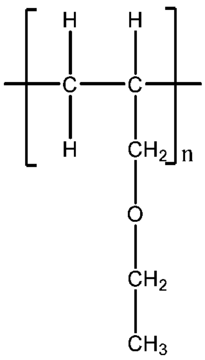 Formula (II-7).

**10.** The ether polymer according to any one of claims 6 to 9, wherein n is selected from positive integers in a range of 1500 to 25000, and/or a molecular weight of the ether polymer is in a range of $1.2\times10^5$ g/mol to $1.0\times10^6$ g/mol.

**11.** A positive electrode plate, comprising a positive electrode current collector and a positive electrode film layer disposed on the positive electrode current collector, the positive electrode film layer comprising a positive electrode active material and an ether polymer which comprises the ether polymer according to any one of claims 1 to 10.

**12.** A negative electrode plate, comprising a negative electrode current collector and a negative electrode film layer disposed on the negative electrode current collector, the negative electrode film layer comprising a negative electrode active material and an ether polymer which comprises an ether polymer according to any one of claims 1 to 10.

**13.** A battery cell, comprising a positive electrode plate and a negative electrode plate, the positive electrode plate comprising the positive electrode plate according to claim 11, and/or the negative electrode plate comprising the negative electrode plate according to claim 12.

**14.** A battery, comprising the battery cell according to claim 13.

**15.** An electrical device, comprising the battery according to claim 14.

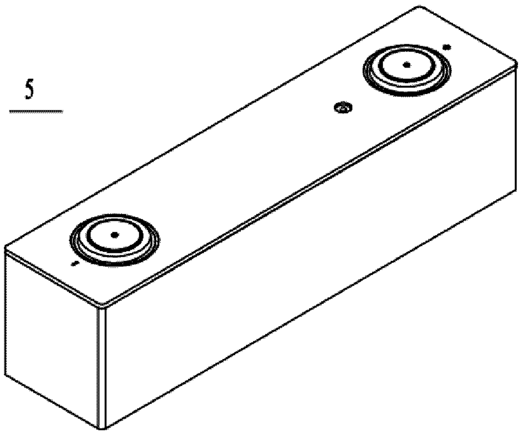


FIG. 1

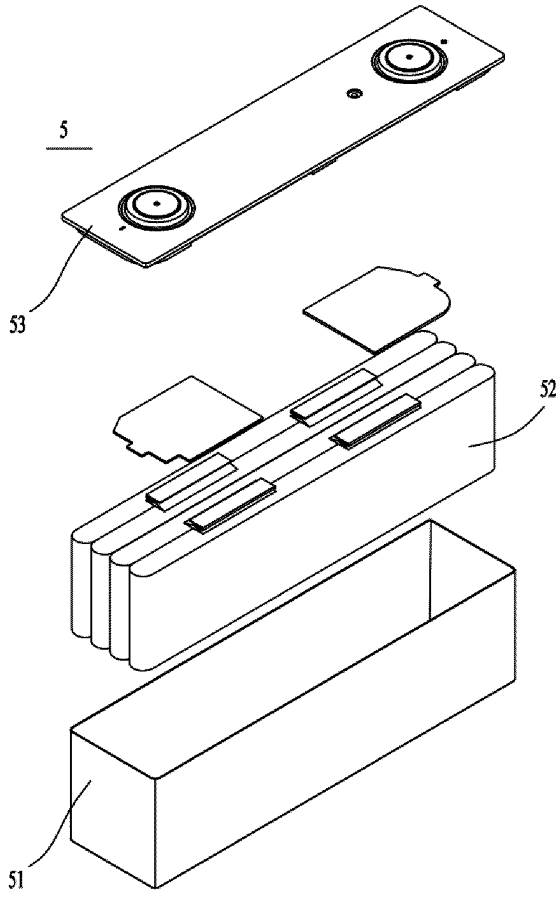


FIG. 2

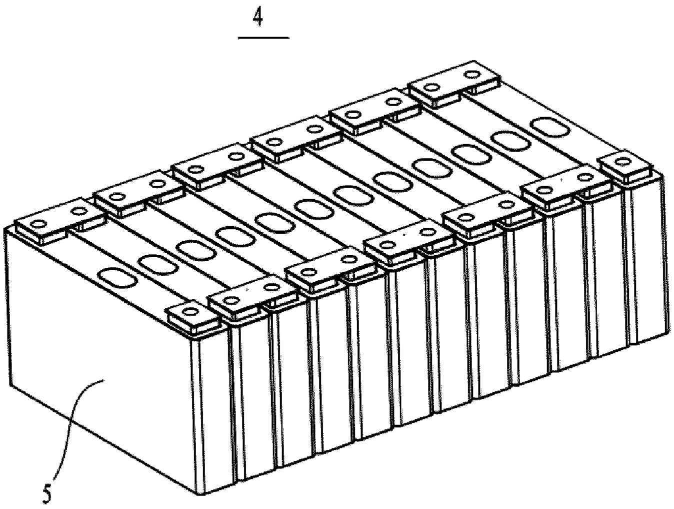


FIG. 3

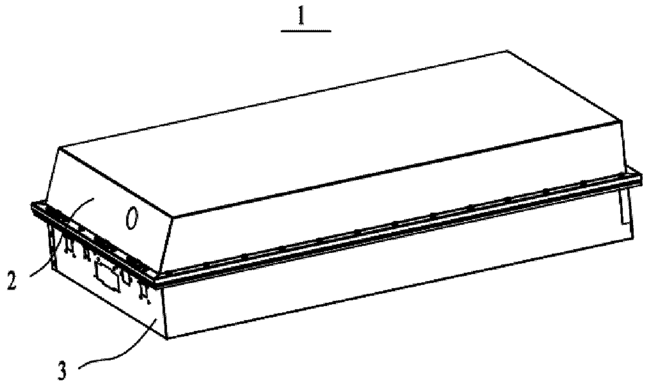


FIG. 4

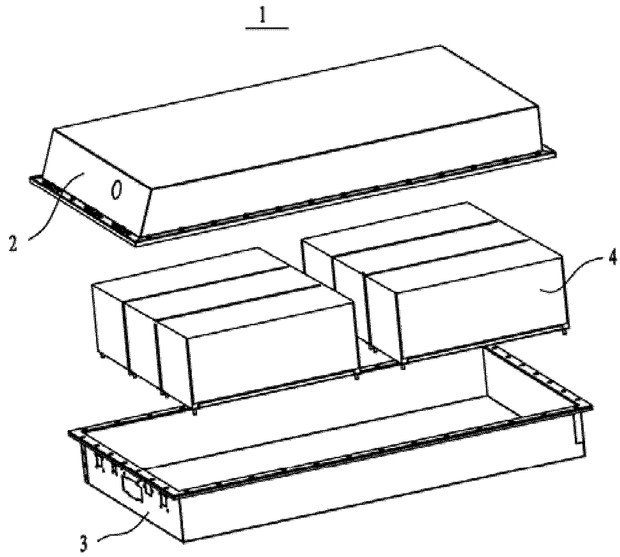


FIG. 5

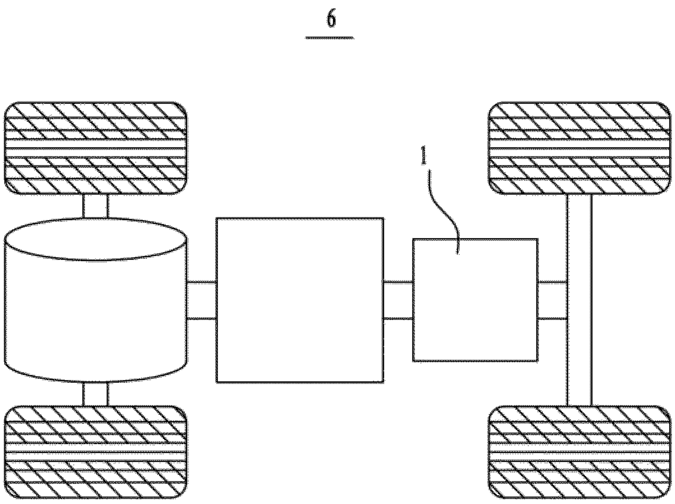


FIG. 6

**INTERNATIONAL SEARCH REPORT**

International application No.
**PCT/CN2023/076843**

**A. CLASSIFICATION OF SUBJECT MATTER**

C08G65/08(2006.01)i; C08F16/12(2006.01)i; C08F116/12(2006.01)i; C08L29/10(2006.01)i; C08L35/08(2006.01)i; H01M4/62(2006.01)i; H01M4/137(2010.01)i

According to International Patent Classification (IPC) or to both national classification and IPC

**B. FIELDS SEARCHED**

Minimum documentation searched (classification system followed by classification symbols)

C08G65, C08F16, C08F116, C08L29, C08L35, H01M4

Documentation searched other than minimum documentation to the extent that such documents are included in the fields searched

Electronic data base consulted during the international search (name of data base and, where practicable, search terms used)

DWPI, WPABS, CNABS, ENTXT, CNKI, ISI web of knowledge: 聚醚, 聚氧化乙烯, 聚亚烷基二醇, 聚乙二醇, 碳酸酯, 凝胶, 电极片, 极片, 电池, 二次电池, polyether, polyalkylene oxide, polyethylene oxide, polyoxyethylene, polyethylene glycol, carbonate, gel, electrode, anode, cathode, sheet, piece, battery, secondary cell

**C. DOCUMENTS CONSIDERED TO BE RELEVANT**

| Category* | Citation of document, with indication, where appropriate, of the relevant passages | Relevant to claim No. |
|---|---|---|
| A | CN 112018392 A (THE 18TH RESEARCH INSTITUTE OF CHINA ELECTRONIC TECHNOLOGY GROUP CORP. et al.) 01 December 2020 (2020-12-01)<br>description, paragraphs 0010-0029, embodiment 1 | 1-15 |
| A | CN 115312776 A (HARBIN INSTITUTE OF TECHNOLOGY) 08 November 2022 (2022-11-08)<br>entire document | 1-15 |
| A | US 5925483 A (KEJHA; JOSEPH B. et al.) 20 July 1999 (1999-07-20)<br>entire document | 1-15 |
| A | JP 2010003679 A (IDEMITSU KOSAN CO., LTD.) 07 January 2010 (2010-01-07)<br>entire document | 1-15 |
| A | CN 112574659 A (QINGDAO INSTITUTE OF BIOENERGY AND BIOPROCESS TECHNOLOGY, CHINESE ACADEMY OF SCIENCES) 30 March 2021 (2021-03-30)<br>entire document | 1-15 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 November 2023** | **17 November 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/076843**

| Patent document cited in search report | Publication date (day/month/year) | Patent family member(s) | Publication date (day/month/year) |
|---|---|---|---|
| CN 112018392 A | 01 December 2020 | CN 112018392 B | 09 December 2022 |
| CN 115312776 A | 08 November 2022 | CN 115312776 B | 26 May 2023 |
| US 5925483 A | 20 July 1999 | None | |
| JP 2010003679 A | 07 January 2010 | JP 2015156385 A | 27 August 2015 |
| | | JP 5755400 B2 | 29 July 2015 |
| CN 112574659 A | 30 March 2021 | CN 112574659 B | 18 November 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 60402002 T
- GB 245862009 T